# EUROPEAN PATENT APPLICATION

(11) **EP 1 585 167 A2**
(43) Date of publication of application: **12.10.2005**
(21) Application number: 05250865.2
(22) Date of filing: 15.02.2005
(51) Int. Cl.: H01J 49/00, G06K 9/00

(54) **Data acquisition and processing in mass spectrometers**

(30) Priority: 18.02.2004 GB 0403535
(71) Applicant: Hoffman, Andrew, Manchester M20 2QT (GB)
(72) Inventor: Hoffman, Andrew, Manchester M20 2QT (GB)
(74) Representative: Wilson Gunn

(57) **Abstract**

The output of a time of flight mass spectrometer plotted over time is a set of signals comprising a series of peaks, the peaks corresponding to the arrival and subsequent detection of ions of different charge to mass ratios. This process is repeated many times to provide a plurality of sets of signals. In the method of the present invention, each set of output signals is processed to detect peaks corresponding to the arrival of an ion at the detector. Once detected, that part of the signal comprising the peak is processed in order to determine the centre of the peak and the total area of the peak to generate an intermediate signal comprising data representing the position and area of each peak detected in a set of signals. The intermediate signals generated by processing each set of output signals are combined to produce a histogram. Peaks in the histogram are then detected and these peaks are processed to determine their centres and areas and thus determining the relative abundances of detected ions of different charge to mass ratios.

## Description

The present invention relates to methods of data acquisition and processing used in Mass Spectrometers and to apparatus for providing these functions.

In a conventional Mass Spectrometer of the time of flight type, ions are produced by an ion source from a sample of material for analysis. The ions are accelerated by an electrode arrangement through a vacuum chamber to a detector. The time interval between the acceleration of an ion and its arrival at the detector is dependent upon the ions charge to mass ratio, those ions with larger charge to mass ratios arriving at the detector earlier than those ions with smaller charge to mass ratios.

The detector generates an electrical output whenever an ion arrives at the detector, the magnitude of the output corresponding to the number of ions arriving at substantially the same time. The output of the detector over time thus comprises a series of peaks corresponding to the arrival of ions. As the ions arrive at times determined by their charge to mass ratios and the magnitude of the output is determined by the number of ions arriving at a given time, by analysing the output the relative abundance of various ions of different charge to mass ratios in the sample can be observed and hence the material under analysis can be identified.

To account for statistical fluctuations in the relative abundance of different ions in the sample, the steps of accelerating and detecting ions are typically repeated on a number of occasions. Each acceleration and detection being known as a shot. In a typical analysis carried out with a Mass Spectrometer a few thousand shots may be performed on ions produced from the sample at intervals of 100µs or similar.

Each shot generates a new set of output signals. As there are many thousands of sets of output signals, in order for a Mass Spectrometer to provide a convenient tool for laboratory use, it is necessary for any signal processing to be carried out in real time on each set of output signals. If processing cannot take place in real time, then there is a requirement for large data storage and processing means to be provided for processing and analysis of the data after the conclusion of a series of shots. This increases the cost of a Mass Spectrometer. Furthermore, the delay in obtaining an analysis of the data may lead to problems not being picked up until after the conclusion of the testing. Alternatively, the processing is carried out in extended intervals between shots however this requires the ion source to operate for longer and hence requires a larger sample and as it operates for longer consumes more energy.

In one typical real time analysis scheme each set of signals is summed together with every other set of output signals and averaged to provide a composite signal. This has the disadvantage that peaks due to ions present in low relative abundances can become lost within the signal noise. This can occur even if the signal to noise ratio on a single shot is relatively large, if the relative abundance of the ion is less than one ion per shot.

To overcome this difficulty, some systems detect the position of peaks in each individual set of signals. The detected peaks in each set of signals are plotted on a combined output to indicate the number of peaks detected for a particular charge to mass ratio. This allows ions with low relative abundances to be detected but does not accurately represent the relative abundances of the different ions as this method does not distinguish between the detection of one ion and the detection of many ions.

Other more complex processing schemes have been proposed but such schemes either have not been or cannot be performed in real time on the output signals from a mass spectrometer.

It is therefore an object of the present invention to provide a data acquisition and processing system for a mass spectrometer that overcomes or alleviates some or all of the above problems.

According to a first aspect of the present invention there is provided a method of processing wherein the plurality of sets of output signals correspond to a succession of shots performed by a time of flight mass spectrometer to determine the charge to mass ratio and relative abundance of ions detected by the mass spectrometer, comprising the steps of: detecting peaks in each set of output signals; determining the centre position and total area of each detected peak in each set of output signals; generating an intermediate signal corresponding to each set of output signals, said intermediate signal indicating the centre position and total area of each detected peak; combining the intermediate signals corresponding to each set of output signals to generate a histogram; detecting peaks in the histogram; and determining the centre position and total area of each peak in the histogram and thereby determining the charge to mass ratio and relative abundance of each ion detected.

In this manner, the output of a mass spectrometer may be analysed and processed to provide an accurate indication of the presence and relative abundance of particular ions in the sample. Furthermore, it is possible to implement this method of processing in real time on suitable equipment.

As each set of signals output by the detector are typically analogue signals, preferably the above method includes the step of converting said analogue signals to digital signals by means of an analogue to digital converter or any other suitable device.

Peaks in each set of output signals may be detected by any suitable method, including but not limited to comparing the signal with a predetermined threshold level or looking for a decline of a threshold percentage from a maximum value or any other similar method. Peaks in the histogram may be detected by the same method or if preferred by a different method to those used to detect peaks in each set of output signals.

Preferably, the centre and area of each detected peak is determined by a centroiding process. Most preferably, the centre and total area of each detected peak in the histogram are determined by a centroiding process, alternatively however, other algorithms such as FIR zero crossing may be used.

Preferably, each intermediate signal generated is combined into the histogram individually before the addition of subsequent intermediate signals to the histogram. In this manner the histogram builds up over time. Preferably, one set of intermediate signals may be added to the histogram in parallel to the generation of a succeeding set of intermediate signals.

Most preferably, the steps of peak detection and determining the centre and area of detected peaks take place only after the intermediate signals for all the sets of output signals have been combined into the histogram.

According to a second aspect of the present invention there is provided an apparatus for processing a plurality of sets of output signals corresponding to a succession of shots performed by a time of flight mass spectrometer to determine the charge to mass ratio and relative abundance of ions detected by the mass spectrometer comprising: means for receiving sets of signals output by the detector of a mass spectrometer; means for detecting peaks in each set of output signals; means for determining the centre position and total area of each detected peak in each set of output signals; means for generating an intermediate signal corresponding to each set of output signals, said intermediate signal indicating the centre position and total area of each detected peak; means for combining the intermediate signals corresponding to each set of output signals to generate a histogram; means for detecting peaks in the histogram; and means for determining the centre position and total area of each peak in the histogram and thereby determining the charge to mass ratio and relative abundance of each ion detected.

In this manner the method of the first aspect of the present invention can be implemented in real time.

Preferably the apparatus additionally comprises an analogue to digital converter for converting the each set of output signals into digital signals for peak detection and further processing.

Preferably the apparatus further comprises memory means wherein intermediate signals are stored before being passed to the means for combining. Most preferably, two memory means are provided, said two memory means being capable of operating in parallel. Preferably this involves one memory means being used to store the intermediate signal corresponding to one set of output signals at substantially the same time as the intermediate signal corresponding to the immediately previous set of output signals is being recalled from the other memory means and combined by the means for combining.

In order that the invention may be more clearly understood, it will now be described further herein, by way of example only and with reference to the following drawings in which:
- Figure 1: shows a set of output signals from a mass spectrometer corresponding to the detection of an ion and a set of simulated noise signals;
- Figure 2: shows a set of output signals being a combination of the sets of signals of figure 1;
- Figure 3: shows a combination of the set of output signals of figure 2 and an additional set of simulated noise signals;
- Figure 4: shows a combination of the set of output signals of figure 3 and an additional eight sets of simulated noise signals;
- Figure 5: shows a histogram corresponding to an intermediate signal generated from the set of output signals of figure 2 according to the method of the present invention;
- Figure 6: shows a histogram similar to that of figure 5 corresponding to an intermediate signal generated from the output signal of figure 2 and a further signal in which a peak was detected;
- Figure 7: shows a histogram similar to those in figures 5 and 6 resulting from the detection of fifty peaks;
- Figure 8: is a schematic block diagram of a prior art apparatus for processing sets of output signals;
- Figure 9: is a schematic block diagram of an apparatus according to the present invention for processing sets of output signals in the manner shown in figures 5-8;
- Figure 10: is a more detailed schematic diagram of the apparatus shown in figure 9;
- Figure 11: illustrates schematically how the method and apparatus of the present invention can overcome an offset.

A time of flight Mass Spectrometer comprises means for producing ions from a substance to be analysed and means for accelerating said ions towards a detector. The detector outputs a signal when an ion arrives at the detector. The time at which the ions arrive at the detector is determined by their charge to mass ratio. Accordingly, the output of the detector plotted over time is a set of signals comprising a series of peaks, the peaks corresponding to the arrival and subsequent detection of ions of different charge to mass ratios. The set of output signals is typically a set of analogue signals, which are converted to a set of digital signals for analysis.

The above process, known as a shot, is repeated many times to provide a plurality of sets of signals. The plurality of signals sets can then be processed to try to provide an indication of the number of ions of each particular type present in the sample without being unduly effected by statistical fluctuations. In a known method of analysing such data, each set of output signals are summed together to provide an average signal over the many shots. This method provides good results for the relatively more abundant ions but often produces poor results for the relatively less abundant ions for the reasons explained below.

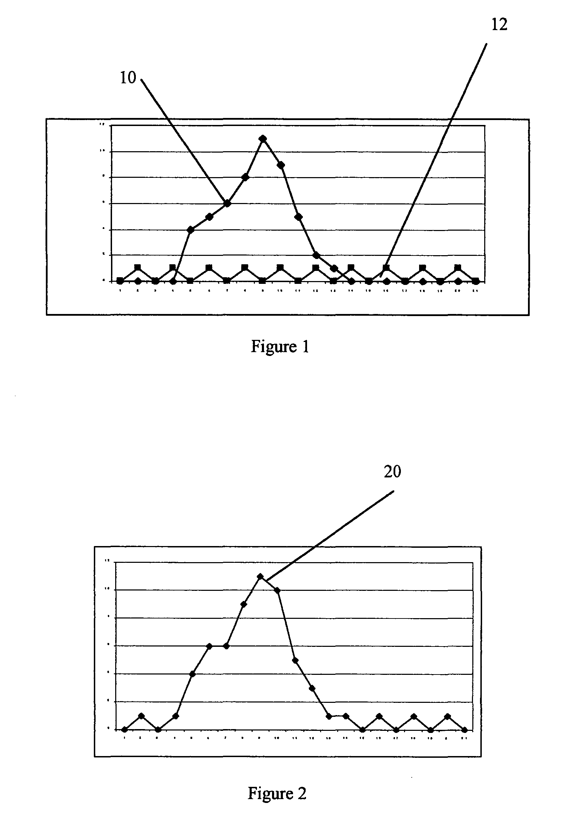

Referring now to figure 1, the two sets of signals are plotted against time. The first signal set 10 is the digitised, noiseless output of a mass spectrometer detector recording the arrival of a single ion. The second signal set 12 represents a simulated noise signal in the detector output. In the example of figure 1, detection of one ion results in a peak signal intensity of around ten units. The noise signal 12 has an amplitude of approximately one unit. Figure 2 shows a signal 20 that is the combination of the two signals 10, 12 and is thus representative of the actual output signal from the detector of a mass spectrometer. This shows that it is relatively easy to detect such a peak in a set of signals from a single shot. If one or more ions are detected at this time in every shot, it will obviously be relatively easy to pick out the corresponding peak in the signal from the noise.

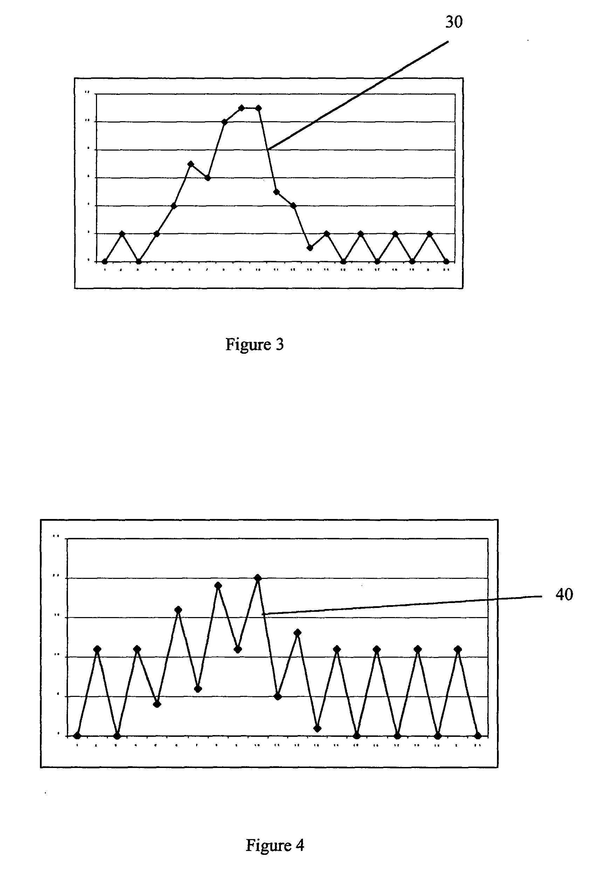

If however, a particular ion is not very abundant within the sample and as a consequence is not detected on every shot, then the peak in the signal corresponding to the ion will not be very prominent in relation to the noise signal 12 once the several sets of output signals are combined. This is illustrated in figures 3 and 4. Figure 3 shows a signal 30 resulting from the addition of a further noise signal set 12 to signal set 20. Figure 4 shows a signal 40, which is the result of eight further noise signal sets 12 being added to the signal 30. It is difficult if not impossible to see the peak from the original signal set 10. This shows how with signal averaging processes ions with low relative abundance are not easily detected.

An alternative method is when processing signals to detect ions with low relative abundance. This involves analysing each set of output signals to detect peaks, the position of the peaks within the signal set being recorded. This process is carried out on a succession of signal sets and the peak positions recorded from all the data sets are then plotted. This provides an indication of the ions that are present in the sample but does not provide a good indication of the relative numbers of each type of ion present. This is because a recorded peak may correspond to the arrival of one ion or many ions.

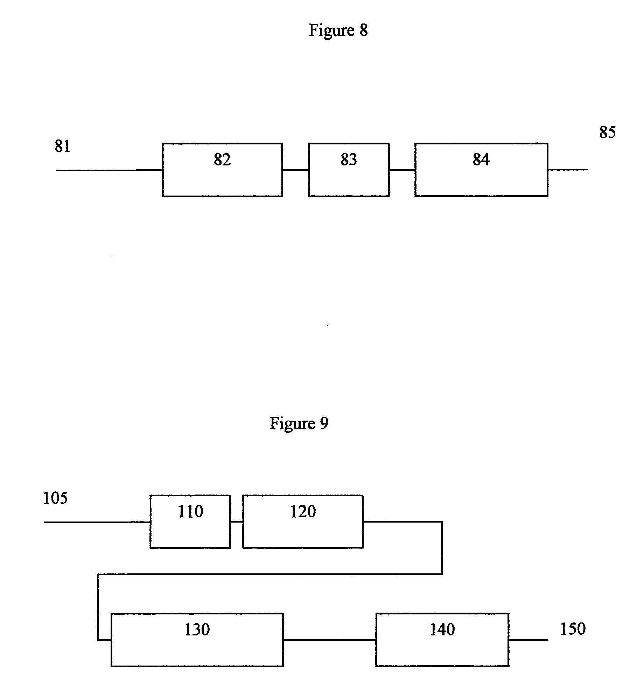

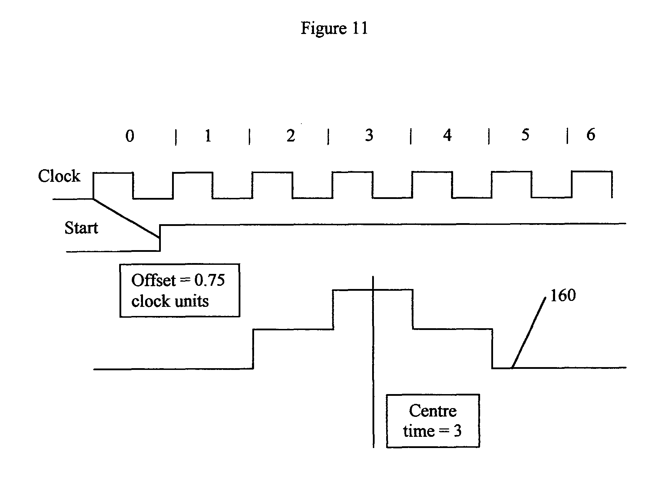

Figure 8 shows a schematic diagram of apparatus 80 for performing this method. A set of output signals 81, from the detector of a Mass Spectrometer is passed to an analogue discriminator 82, which detects the presence or absence of a peak and outputs signals to a time stamp 83. The detection of peaks is registered by time stamp 83 and its output is passed to a one-bit histogrammer 84. The one bit histogrammer receives the output from the time stamp 83 and generates an output signal 85 indicating the location of each peak in the set of output signals 81.

In the method of the present invention, each set of output signals is processed to detect peaks corresponding to the arrival of an ion at the detector. The peak detection may be performed by any suitable known process such as those involving comparison with a threshold parameter or those involving detecting a threshold percentage decline from a local maximum value. Typically, the set of output signals are converted from analogue signals to digital signals and the peak detection is then carried out on the digital signals.

Once detected, that part of the signal comprising the peak is processed in order to determine the centre of the peak and the total area of the peak. This is typically achieved by a centroiding process, but other suitable processes may be used if desired. The result of this processing is an intermediate signal comprising data representing the position and area of each peak detected in a set of signals.

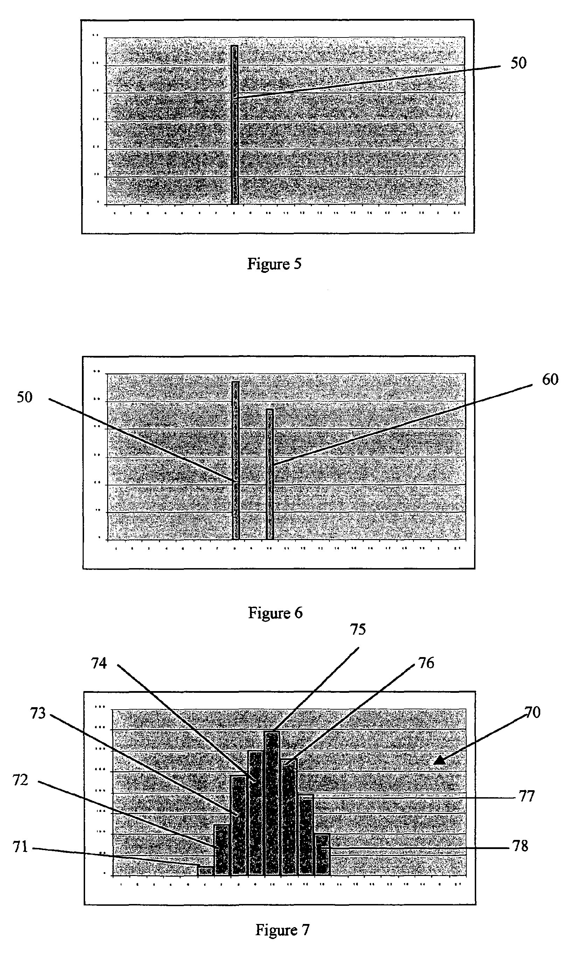

The intermediate signals generated by processing each set of output signals are combined to produce a histogram. The intermediate signals are added in to the histogram one by one as they are generated. In order to speed up the process, one set of intermediate signals is combined into the histogram in parallel with the generation of a succeeding set of intermediate signals. This process is illustrated in figures 5, 6 & 7. Figure 5 represents the histogram after the processing of one set of output signals, the bar 50 representing the position and area of a peak detected in the signal set. In this particular example bar 50 corresponds to the processing of signal set 20 shown in figure 2.

Figure 6 shows the histogram after the detection of a peak in a later set of signals. The histogram now has two bars 50, 60 each corresponding to the position and area of a detected peak. Figure 7 shows the histogram after many more sets of signals have been processed and combined. The histogram has the form of an overall peak 70 comprised of separate bars 71-78 each representing the position and areas of many detected peaks. The overall peak 70 may then be processed to determine its centre and area, typically by a centroiding process.

Normally as a sample when fragmented provides more than one different type of ion, each set of signals will have a series of peaks, which are detected and processed to provide an intermediate signal comprising information on the area and position of each peak in the signal set. As a result, the combined histogram will also have a series of peaks and each peak in the combined histogram is then processed as described for peak 70. In this manner the relative abundance of ions with any particular charge to mass ratio detected by the Mass Spectrometer can be determined.

In order to provide such processing specially adapted apparatus 100 is provided. Such apparatus 100 is illustrated schematically in figure 9. In the apparatus 100 a set of output signals 105 from the detector of a mass spectrometer is input to an analogue to digital converter 110 to be digitised. The digitised signal output by the analogue to digital converter 110 is input to a digital discriminator 120 which detects the presence of peaks in the digitised signal. The digitised signal is then passed to a centroiding time stamp generator 130 which determines the centre position and size of peaks detected by the discriminator 120, and outputs an intermediate signal containing this information to a multi bit histogrammer 140. The multi bit histogrammer 140 converts the output of the centroiding time stamp generator 130 into a corresponding histogram.

As a succession of shots are performed by the Mass Spectrometer, a succession of sets of output signals 105 are passed to the apparatus 100. This results in a succession of intermediate signals being generated by centroiding time stamp generator 130 and passed to multi bit histogrammer 140. The multi bit histogrammer 140 is then operative to combine the successive sets of intermediate signals into a single combined histogram 150. The combined histogram 150 may then be output to external circuitry for further processing. Typically the external circuitry comprises a further discriminator and a further centroiding time stamp generator (not shown), which is operative to detect and determine the centre position and total area of any peaks in the combined histogram 150 in accordance with the method of the present invention.

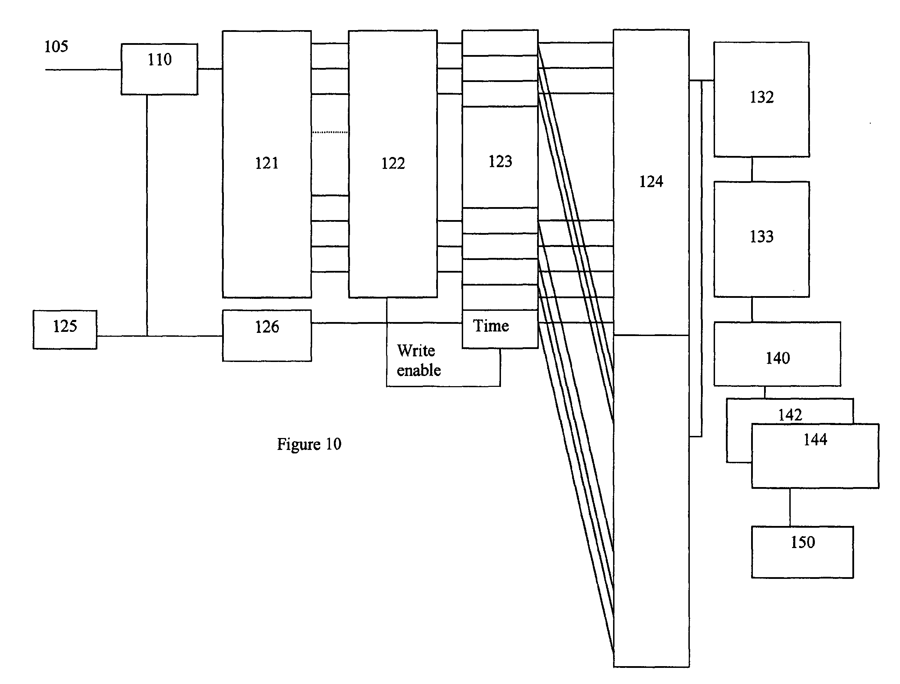

Figure 10 shows a more detailed schematic diagram of the apparatus for implementing the method of the present invention.

In order to perform sufficient processing on the sets of output signals to allow the above method to be used in real time processing of signals. The set of output signals 105 are passed to analogue to digital converter 110 as they are generated. The digitised signals then pass to the discriminator 120 which comprises a time demultiplexer 121, a one stage pipeline processor 122 connected to the outputs demultiplexer 121, a wide first in first out (FIFO) means 123 connected to the outputs of one stage pipeline processor 122, a block pipeline processor 124 connected to the outputs of the FIFO 123 via a fan-out connection and a clock 125 and sample counter 126 for synchronising the operation of each component 121-124. The demultiplexer 121 samples the signal at a series of successive time intervals, to provide a series of time interval outputs. The one stage pipeline processor 122 performs threshold detection on each time interval output. The FIFO 123 connects the one stage pipeline processor 122 to the block pipeline processor 124 which is operative to determine which output levels above threshold detection form parts of peaks and where the boundary output levels forming part of each peak are. This form of discriminator allows peak detection to take place in real time on a digitised set of output signals from a Mass Spectrometer.

The centroiding time stamp generator comprises a centroiding means 132 operative to determine the centre of each time interval output peak and also to determine the area under each time interval output peak and a time stamp calculator 134 operative to determine the ion time of flight corresponding to the centre of each time interval output peak. The area and time of flight data, described above as the intermediate signal is then output to the histogrammer 140. Centroiding in this manner allows the centre of the peak to be determined accurately to fractions of the demultiplexer sample time interval. Typically, the peak centre may be determined to an interval one tenth of the sample interval.

Histogrammer 140 is provided with two memory means 142, 144. The memory means 142, 144 allow the histogrammer to process sets of intermediate signals generated from successive sets of output signals in parallel. In this way, a first set of intermediate signals are written to memory bank 142 as they are generated by the centroiding time stamp generator 130. When the complete set of intermediate signals have been written to memory means 142, a second set of intermediate signals are written to memory means 144. In parallel with the writing of the second set of intermediate signals, the first set of intermediate signals are recalled from memory means 142 and are added to the combined histogram 150 generated by the histogrammer 140. When this is complete a third set of intermediate signals may be written to memory means 142 in parallel with the recall of the second set of intermediate signals from memory means 144 and their addition to the combined histogram 150. By this means, generation of the combined histogram 150 can take place in real time.

Once the series of shots are complete, the centres and areas of any peaks combined histogram are determined as described above to indicate the charge to mass ratios of detected ions and their relative abundance.

The apparatus can use either the system clock 125 or a remote trigger to start up. If a remote trigger is used then the clock start time must be interpolated to the same accuracy, as the centres of each peak are determined to. This offset can then be added to the centre time determined by centroiding by the time stamp generator 134. The time output to the histogrammer 140 is thus known to a greater accuracy than one clock interval.

This is illustrated in figure 11 wherein the system starts with an offset of 0.75 clock units. The example signal 160 has a centre at 3.0 clock units. If the centroiding process allows the centre of a peak to be determined to 0.25 clock units, for example the time stamp generator may deal with this by multiplying all clock unit determined times by four such that the offset is now three reduced units and the peak centre is now at twelve reduced units. The offset of three can then be subtracted to give the true position of the peak centre as reduced units. The histogrammer is then able to operate using the reduced time units and thus determine the time of flight of ions to greater accuracy than the sample interval.

Using present systems, a clock sample rate of 2GHz is possible, however by use of the apparatus and method of the present invention, as described above an effective signal rate of up to 20Ghz can be achieved. This allows accuracy in the time of flight of ions of the order of parts per million for shots taking place at intervals of tens of microseconds.

It is of course to be understood that the invention is not to be limited to the details of the above embodiment which is described by way of example only.

## Claims

1. A method of processing a plurality of sets of output signals, wherein the plurality of sets of output signals correspond to a succession of shots performed by a time of flight mass spectrometer to determine the charge to mass ratio and relative abundance of ions detected by the mass spectrometer, comprising the steps of: detecting peaks in each set of output signals; determining the centre position and total area of each detected peak in each set of output signals; generating an intermediate signal corresponding to each set of output signals, said intermediate signal indicating the centre position and total area of each detected peak; combining the intermediate signals corresponding to each set of output signals to generate a histogram; detecting peaks in the histogram; and determining the centre position and total area of each peak in the histogram and thereby determining the charge to mass ratio and relative abundance of each ion detected.

2. A method as claimed in claim 1 wherein the method includes the step of converting analogue output signals to digital signals by means of an analogue to digital converter or any other suitable device.

3. A method as claimed in claim 1 or claim 2 wherein peaks in each set of output signals are detected by comparing the signal with a predetermined threshold level or looking for a decline of a threshold percentage from a maximum value and wherein peaks in the histogram are detected by comparing the signal with a predetermined threshold level or looking for a decline of a threshold percentage from a maximum value.

4. A method as claimed in any preceding claim wherein the centre and area of each detected peak in the output signal are determined by a centroiding process and the centre and total area of each detected peak in the histogram are determined by a centroiding process.

5. A method as claimed in any preceding claim wherein each intermediate signal generated is combined into the histogram individually before the addition of subsequent intermediate signals to the histogram.

6. A method as claimed in any preceding claim wherein one set of intermediate signals is added to the histogram in parallel to the generation of a succeeding set of intermediate signals.

7. A method as claimed in any preceding claim wherein the steps of peak detection and determining the centre and area of detected peaks take place only after the intermediate signals for all the sets of output signals have been combined into the histogram.

8. An apparatus for processing a plurality of sets of output signals corresponding to a succession of shots performed by a time of flight mass spectrometer to determine the charge to mass ratio and relative abundance of ions detected by the mass spectrometer comprising: means for receiving sets of signals output by the detector of a mass spectrometer; means for detecting peaks in each set of output signals; means for determining the centre position and total area of each detected peak in each set of output signals; means for generating an intermediate signal corresponding to each set of output signals, said intermediate signal indicating the centre position and total area of each detected peak; means for combining the intermediate signals corresponding to each set of output signals to generate a histogram; means for detecting peaks in the histogram; and means for determining the centre position and total area of each peak in the histogram and thereby determining the charge to mass ratio and relative abundance of each ion detected.

9. An apparatus as claimed in claim 8 wherein the apparatus additionally comprises an analogue to digital converter for converting the each set of output signals into digital signals.

10. An apparatus as claimed in claim 8 or claim 9 wherein the apparatus further comprises memory means wherein intermediate signals are stored before being passed to the means for combining.

11. An apparatus as claimed in any one of claims 8 to 10 wherein two memory means are provided, said two memory means being capable of operating in parallel.

12. An apparatus as claimed in claim 11 wherein this involves one memory means being used to store the intermediate signal corresponding to one set of output signals at substantially the same time as the intermediate signal corresponding to the immediately previous set of output signals is being recalled from the other memory means and combined by the means for combining.
